# EUROPÄISCHE PATENTSCHRIFT

(11) **EP 2 664 889 B1**
(45) Veröffentlichungstag und Bekanntmachung des Hinweises auf die Patenterteilung: **10.01.2018**
(21) Anmeldenummer: 13002366.6
(22) Anmeldetag: 03.05.2013
(51) Int. Cl.: F41G 7/30, G01S 17/66

(54) **Positionsbestimmung und Datenübertragung mittels Laser**
Positioning and data transmission by means of laser
Détermination de position et transmission de données à l'aide d'un laser

(30) Priorität: 14.05.2012 DE 102012009512
(43) Veröffentlichungstag der Anmeldung: 20.11.2013
(73) Patentinhaber: MBDA Deutschland GmbH, 86529 Schrobenhausen (DE)
(72) Erfinder: Löb, Thomas, D-85716 Unterschleißheim (DE); Fasol, Dieter, D-82024 Taufkirchen (DE); Offenbach, Detlev, D-85356 Freising (DE); Engel, Jürgen, D-82178 Puchheim (DE)
(74) Vertreter: LKGLOBAL Lorenz & Kopf PartG mbB Patentanwälte

(56) Entgegenhaltungen:
- DE-A1- 2 855 533
- DE-C1- 3 500 282
- US-A- 4 096 380
- US-A- 4 634 271

## Beschreibung

### GEBIET DER ERFINDUNG

Die Erfindung betrifft eine Laserabstrahlvorrichtung, eine Laserempfangsvorrichtung und ein Verfahren zur Positionsbestimmung und Datenübertragung.

### HINTERGRUND DER ERFINDUNG

Im militärischen Bereich ist es bekannt, die Entfernung von sich bewegenden Objekten, beispielsweise freundlichen oder gegnerischen Fahrzeugen oder Flugkörpern, mittels Laserentfernungsmessen zu bestimmen.

Weiter ist es bekannt, über sogenannte Laser-Datenlinks Daten von einem Sender zu einem Empfänger zu übermitteln, wobei die Daten vom Sender in einen Laserstrahl moduliert werden und vom Empfänger die Daten aus dem Laserstrahl durch Demodulation extrahiert werden.

Die US 4 096 380 beschäftigt sich mit einem System, bei dem Steuersignale über einen Laserstrahl von der Bodenstation zu einem Flugkörper übertragen werden können, der gleichzeitig zur Positionsbestimmung des Flugkörpers benutzt wird.

Die US 4 634 271 betrifft ein Gerät zum Führen eines Flugkörpers zu einem Ziel, bei dem ein Laserstrahl zur Positionsbestimmung des Flugkörpers moduliert wird, um Steuerungssignale zu dem Flugkörper zu übertragen.

Die DE 28 55 533 beschreibt ein Verfahren zur Korrektur der Flugbahn eines Geschosses, bei dem einem Laserstrahl ein Datenfeld aufmoduliert wird, das an das Geschoss mit dem Laserstrahl übermittelt wird.

Die DE 35 00 282 C1 beschäftigt sich mit einer Richtoptik für die Leitstrahllenkung eines Flugkörpers, bei der der Richtstrahl räumlich moduliert wird.

### ZUSAMMENFASSUNG DER ERFINDUNG

Es ist die Aufgabe der Erfindung, die externe Steuerung eines sich bewegenden Objekts zu vereinfachen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft eine Laserabstrahlvorrichtung. Die Laserabstrahlvorrichtung kann beispielsweise auf einem Luftfahrzeug, wie etwa einem Aufklärungsflugzeug oder einem Bodenfahrzeug installiert sein.

Gemäß einer Ausführungsform der Erfindung umfasst die Laserabstrahlvorrichtung eine Laserquelle zum Generieren eines Laserstrahls, einen Modulator zum Modulieren des Laserstrahls und einen Detektor zum Empfangen eines reflektierten Laserstrahls. Die Laserabstrahlvorrichtung bzw. eine Steuerung der Laserabstrahlvorrichtung ist dazu ausgeführt, Daten zu empfangen und den Laserstrahl zum Übertragen an eine Laserempfangsvorrichtung mit dem Modulator zu modulieren. Außerdem ist die Laserabstrahlvorrichtung bzw. deren Steuerung dazu ausgeführt, mit dem Detektor eine Entfernung der Laserempfangsvorrichtung zu ermitteln.

Auf diese Weise können ein Laserentfernungsmesser und ein Laser-Datenlink in einem System kombiniert werden. Dies kann die Komplexität zweier getrennter Systeme und auch deren Platzbedarf reduzieren. Auch kann der Energieverbrauch des Systems gesenkt und die Ausfallhäufigkeit vermindert werden.

Durch die gemeinsame Nutzung eines Laser-Datenlinks zur Laserentfernungsmessung und Richtungsbestimmung kann die Position eines Objekts, das die Laserempfangsvorrichtung trägt, dreidimensional vermessen werden. Beispielsweise kann die Entfernung des Objekts bzw. der Laserempfangsvorrichtung über die Laufzeit des Laserstrahls ermittelt werden. Darüber hinaus können Daten bzw. Informationen vom einem ersten Objekt, das die Laserabstrahlvorrichtung trägt, zu einem zweiten Objekt übertragen werden, das die Laserempfangsvorrichtung trägt.

Der Laserstrahl kann beispielsweise ein gepulster Laserstrahl sein, der zur Entfernungsmessung und als Datenlink zur Steuerung eines Flugkörpers verwendet wird. Es ist zu verstehen, dass der Laserstrahl auch ein kegelartig aufgeweiteter Strahl sein kann.

Gemäß einer Ausführungsform der Erfindung ist die Laserabstrahlvorrichtung dazu ausgeführt, den Laserstrahl auf die Laserempfangseinrichtung zu richten. Beispielsweise umfasst die Laserabstrahlvorrichtung einen Gimbal, mit dem die Laserquelle und der Detektor geschwenkt werden können. Ein Gimbal kann eine steuerbare kardanische Aufhängung für die Laserquelle und den Detektor umfassen.

Gemäß einer Ausführungsform der Erfindung ist die Laserabstrahlvorrichtung dazu ausgeführt, eine Richtung des gestreuten Laserstrahls zu ermitteln. Dies kann beispielsweise mit einem Mehrfelder-, bzw. Vier-Quadranten-Detektor als Detektor für Laserlicht geschehen. Die Richtung des zweiten Objekts bzw. der Laserempfangsvorrichtung kann beispielsweise mit einem Mehrfelder-, bzw. Vier-Quadranten-Detektor über die ungleiche Belichtung verschiedener Felder des Mehrfelder-, bzw. Vier-Quadranten-Detektors bestimmt werden.

Gemäß einer Ausführungsform der Erfindung ist die Laserabstrahlvorrichtung dazu ausgeführt, eine dreidimensionale Position der Laserempfangsvorrichtung zu ermitteln. Aus der Richtung und der Entfernung des zweiten Objekts kann die Steuerung der Laserempfangsvorrichtung berechnen, wo sich bezüglich eines Koordinatensystems das zweite Objekt relativ zum ersten Objekt befindet.

Ein weiterer Aspekt der Erfindung betrifft eine Laserempfangsvorrichtung, die beispielsweise auf einem Luftfahrzeug, wie etwa einem Lenkflugkörper oder einem Bodenfahrzeug installiert sein kann.

Gemäß einer Ausführungsform der Erfindung umfasst die Laserempfangsvorrichtung einen Rückstrahler zum Reflektieren eines Teils eines Laserstrahls in eine ursprüngliche Richtung des Laserstrahl, einen Laserempfänger zum Umwandeln eines zweiten Teil des Laserstrahls in ein moduliertes Signal und einen Demodulator zum Extrahieren von Daten aus dem modulierten Signal. Damit kann nicht nur der Laserstrahl zur Entfernungsmessung reflektiert, sondern auch zur Datenübertragung ausgewertet werden.

Gemäß einer Ausführungsform der Erfindung umfasst der Rückstrahler einen Winkelreflektor, der eine Öffnung aufweist, in der der Laserempfänger angeordnet ist. Somit kann der Winkelreflektor einen Teil des Laserlichts genau in die Richtung zurückwerfen, aus der der Laserstrahl gekommen ist und einen anderen Teil auf den Laserempfänger richten.

Gemäß einer Ausführungsform der Erfindung ist die Laserempfangsvorrichtung in einem Lenkflugkörper installiert und umfasst eine Mehrzahl von Rückstrahlern, die in einer Umfangsrichtung um eine Längsachse des Lenkflugkörpers angeordnet sind. Damit kann ein rollender Flugkörper eingesetzt werden, der ein einfaches Design und wenige Aktuatoren aufweisen kann.

Ein Aspekt der Erfindung betrifft ein Positionsbestimmungs- und Datenübertragungssystem mit einer Laserabstrahlvorrichtung, so wie sie obenstehend und untenstehend beschrieben ist, und eine Laserempfangsvorrichtung, so wie sie obenstehend und untenstehend beschrieben ist.

Die Laserabstrahlvorrichtung wird beispielsweise von einem ersten sich bewegenden Objekt, beispielsweise einem Schiff, einem Flugzeug oder einem Bodenfahrzeug getragen, die Laserempfangsvorrichtung kann beispielsweise von einem weiteren zweiten bewegten Objekt, wie etwa einem weiteren Flugzeug, einem weiteren Schiff oder einem Lenkflugkörper, aber auch einem weiteren Bodenfahrzeug getragen werden.

Insgesamt ist es möglich, die Relativbewegung der beiden sich bewegenden Objekte zu steuern, indem einerseits eine Relativpositionsbestimmung der zwei sich bewegenden Objekte durchgeführt wird und zum anderen ein Datenaustausch zwischen den beiden Objekten, insbesondere von dem ersten Objekt zum zweiten Objekt durchgeführt wird.

Das System kann beispielsweise ein Konvoi aus wenigstens zwei Fahrzeugen sein, auf denen die Laserabstrahl- und Laserempfangsvorrichtungen installiert sind.

Ein derartiges System kann beispielsweise zur Verkehrssteuerung eingesetzt werden, indem ein Fahrzeug mittels des Systems den Abstand eines nachfolgenden Fahrzeugs bestimmt und dem nachfolgenden Fahrzeug dessen Entfernung zusammen mit weiteren Daten, wie etwa Brems- und Gaspedalbetätigungen übermittelt. Damit kann der Abstand in Fahrzeugkolonnen bzw. Konvois minimiert und optimiert werden. Eine schnelle Reaktion auf eine Aktion eines vorausfahrenden Fahrzeugs ist möglich, da nicht nur der Abstand, sondern auch das Fahrverhalten des vorausfahrenden Fahrzeugs überwacht und übermittelt werden kann. Eine Entfernungsmessung kann auch dann funktionieren, wenn der Vordermann nicht dieselbe technische Ausstattung besitzt. Weiter können die gesammelten Informationen an geeignete Relaisstationen (beispielsweise Mautkontrollbrücken auf der Autobahn) übergeben werden, was zur effektiven, verkehrsabhängigen Geschwindigkeitsbegrenzung oder Steuerung der Verkehrsflüsse verwendet werden kann.

Auch kann das System bei einem Konvoi als elektronische Deichsel eingesetzt werden. Beispielsweise ist nur ein erstes Fahrzeug besetzt und die nachfolgenden Fahrzeuge werden über das erste Fahrzeug ferngesteuert, wobei das System die Steuerdaten überträgt und gleichzeitig den Abstand der Fahrzeuge zueinander überwacht. Auf diese Weise kann der Personaleinsatz bei Transporten in gefährdeten Gebieten optimiert werden, indem beispielsweise unbemannte Fahrzeuge eingesetzt werden. Eine Kontrolle einer Kolonne bzw. eines Konvois aus Fahrzeugen ist mit nur einem bemannten Leitfahrzeug möglich. Weiter ist es möglich, dass eine derartige Kolonne keine hochfrequente Energie abstrahlt und daher stör- und aufklärungssicherer ausgestaltet sein kann.

Alternativ kann das System ein Aufklärungsflugzeug und einen Lenkflugkörper umfassen, der von dem Aufklärungsflugzeug gelenkt wird. Beispielsweise kann das Aufklärungsflugzeug ein HALE(high altitude long endurance)-UAV sein.

Auf diese Weise kann ein einfach aufgebauter und kostengünstiger Flugkörper ohne Suchkopf mittels des Laserstrahls zum Ziel geführt werden. Weiter kann ein Flugzeug dazu verwendet werden, den Flugkörper fortlaufend mit wichtigen Informationen zu versorgen.

Insgesamt kann die Navigation im Flugkörper, beispielsweise durch eine Steuerung des Flugkörpers, vereinfacht werden, indem die Steuerdaten nicht im Flugkörper, sondern extern in einem Träger der Laserabstrahlvorrichtung berechnet werden und dann mittels des Laserstrahls an den Flugkörper gesendet werden. Auf diese Weise kann beispielsweise die Intelligenz größtenteils in ein Aufklärungsflugzeug oder HALE verlagert werden.

Damit kann die Position eines Flugkörpers extern vermessen werden, beispielsweise über ein unbemanntes Luftfahrzeug bzw. Aufklärungsfahrzeug. Damit ist weniger Sensorik im Flugkörper erforderlich. Die Position des Flugkörpers kann extern berechnet werden. Damit ist weniger Rechenleistung im Flugkörper notwendig. Mit dem System kann ein einfacher, kostengünstiger Flugkörper, insbesondere ohne Suchkopf, eingesetzt werden, da ein großer Teil der Navigationsberechnung extern erfolgen kann.

Dem Flugkörper können seine eigene Position und die aktuellen Zielkoordinaten von extern übermittelt werden. Damit können die Koordinatensysteme des Flugkörpers und des Aufklärungsflugzeugs abgeglichen werden. Es ist möglich, dass keine unterschiedlichen Koordinatensysteme zwischen Aufklärungs- und Wirksystem, d. h. Flugkörper, vorhanden sind. Durch das Aktualisieren der Zielposition und auch der Zielgeschwindigkeit ist eine Bekämpfung von Zielen in Bewegung möglich.

Im Flugkörper kann eine günstige Initialsensorik verwendet werden, da diese durch die übertragenen Daten fortlaufend kalibriert werden kann. Insbesondere kann die Kalibrierung im Flug über die vermessene Position erfolgen.

Weiter ist keine aktive Zielbeleuchtung erforderlich und es besteht die Möglichkeit eines kommandierenden Missionsabbruchs für den Flugkörper.

Darüber hinaus kann ein Laser-Datenlink bzw. die Übermittlung von Daten mittels eines Laserstrahls nicht gestört werden oder fast nicht gestört werden.

Ein weiterer Aspekt der Erfindung betrifft ein Verfahren zur Positionsbestimmung und Datenübertragung, wie es beispielsweise von dem eben genannten System ausgeführt werden kann.

Gemäß einer Ausführungsform der Erfindung umfasst das Verfahren die Schritte von: Generieren eines Laserstrahls in einer Laserabstrahlvorrichtung; Empfangen von Daten in der Laserabstrahlvorrichtung; Modulieren des Laserstrahl mit den Daten; Reflektieren eines ersten Teil des Laserstrahls an einer Laserempfangsvorrichtung; Empfangen eines reflektierten Laserstrahls in der Laserabstrahlvorrichtung; Ermitteln einer Entfernung der Laserempfangsvorrichtung aus dem reflektierten Laserstrahl; Demodulieren eines zweiten Teils des Laserstrahls in der Laserempfangsvorrichtung; und Extrahieren von Daten aus dem demodulierten Signal in der Laserempfangsvorrichtung.

Mit dem Verfahren kann beispielsweise ein Flugkörper gelenkt werden. Insbesondere kann ein Lenkflugkörper, der nur minimale Sensorik aufweist, extern gesteuert werden. Die Zieldaten für den Lenkflugkörper können beispielsweise extern ermittelt werden und der Lenkflugkörper auf diese Weise auf das Ziel zugelenkt werden. Beispielsweise kann ein hoch fliegendes unbemanntes Luftfahrzeug mit langer Standdauer, ein sogenanntes HALE (high altitude long endurance) die Laserabstrahlvorrichtung tragen und die Steuerdaten mittels des Laserstrahls an den Lenkflugkörper übermitteln.

Gemäß einer Ausführungsform der Erfindung umfasst das Verfahren weiter die Schritte zum Ermitteln einer Position der Laserempfangsvorrichtung aus dem reflektierten Laserstrahl; und Übermitteln der Position mit dem modulierten Laserstrahl an die Laserempfangsvorrichtung.

Gemäß einer Ausführungsform der Erfindung wird die Laserempfangsvorrichtung von einem manövrierbaren Objekt getragen. Das Verfahren umfasst weiter den Schritt zum Übermitteln von Steuerdaten an das manövrierbare Objekt mit dem modulierten Laserstrahl. Die Laserabstrahlvorrichtung kann von einem Bodenfahrzeug oder einem Luftfahrzeug getragen werden oder Bestandteil einer Bodenstation sein. Das manövrierbare Objekt kann ein Flugzeug, ein Flugkörper oder ein Bodenfahrzeug sein.

Im Folgenden werden Ausführungsbeispiele der Erfindung mit Bezug auf die beiliegenden Figuren detailliert beschrieben.

### KURZE BESCHREIBUNG DER FIGUREN

Die Fig. 1 zeigt eine schematische Ansicht einer Laserabstrahlvorrichtung gemäß einer Ausführungsform der Erfindung.
Die Fig. 2 zeigt eine schematische Ansicht einer Laserempfangsvorrichtung gemäß einer Ausführungsform der Erfindung.
Die Fig. 3 zeigt ein System aus einer Laserabstrahlvorrichtung und einer Laserempfangsvorrichtung gemäß einer Ausführungsform der Erfindung.
Die Fig. 4 zeigt schematisch einen Lenkflugkörper gemäß einer Ausführungsform der Erfindung.
Die Fig. 5 zeigt schematisch einen Querschnitt durch den Lenkflugkörper aus der Fig. 4.
Die Fig. 6 zeigt eine schematische Ansicht eines Systems aus mehreren Bodenfahrzeugen gemäß einer Ausführungsform der Erfindung.
Die Fig. 7 zeigt ein Diagramm, das ein Verfahren zur Positionsbestimmung und Datenübertragung gemäß einer Ausführungsform der Erfindung darstellt.
Die Fig. 8 zeigt eine Ansicht der Szene aus der Fig. 7 von oben.

Grundsätzlich sind identische oder ähnliche Teile mit den gleichen Bezugszeichen versehen.

### DETAILLIERTE BESCHREIBUNG VON AUSFÜHRUNGSBEISPIELEN

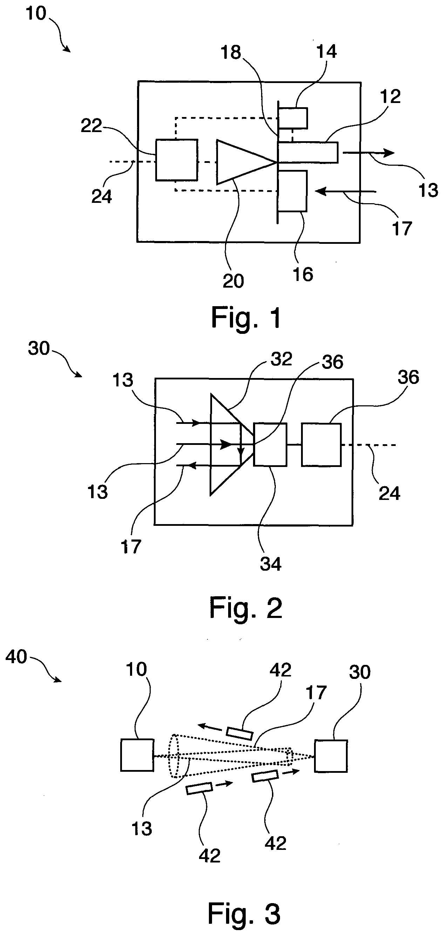

Die Fig. 1 zeigt eine Laserabstrahlvorrichtung 10, die eine Laserquelle 12, einen Modulator 14 und einen Detektor 16 umfasst, die auf einer gemeinsamen Plattform 18 angeordnet sind, so dass sie von einem sogenannten Gimbal 20, das heißt einer ansteuerbaren kardanischen Aufhängung 20 innerhalb eines bestimmten Raumbereichs in eine beliebige Richtung geschwenkt werden können. Weiter umfasst die Laserabstrahlvorrichtung 10 eine Steuerung 22 bzw. Steuereinheit 22, die dazu ausgeführt ist, den Gimbal 20 anzusteuern und somit zu schwenken. Auf diese Weise kann die Laserquelle 12 und der Detektor 16 in eine bestimmte Raumrichtung geschwenkt werden.

Die Laserquelle 12 ist dazu ausgeführt, einen Laserstrahl 13 zu generieren. Dabei ist zu verstehen, dass ein Laserstrahl 13 auch ein kegelförmig aufgeweiteter Strahl sein kann.

Der Detektor 16 ist dazu ausgeführt, einen reflektierten Laserstrahl 17 zu empfangen und daraus ein Signal zu erzeugen, das die Steuereinheit bzw. Steuerung 22 auswerten kann.

Weiter ist die Steuerung 22 dazu ausgeführt, externe Daten 24 zu empfangen und den Modulator 14 derart mit diesen Daten anzusteuern, dass die Laserquelle 12 entsprechend moduliert wird.

Außerdem ist die Steuerung 22 dazu ausgeführt, Daten von dem Detektor 16 zu empfangen, der einen Teil des von der Laserquelle 12 abgestrahlten Laserlichts erfassen kann. Insbesondere ist die Steuerung 22 dazu ausgeführt, mittels einer Laufzeitermittlung zu bestimmen, in welcher Entfernung von der Laserquelle 12 bzw. der Laserabstrahlvorrichtung 10 das Laserlicht 17 reflektiert wurde.

Weiter ist es möglich, dass mit dem Detektor 16 die Richtung des reflektierten Laserlichts ermittelt wird, beispielsweise dadurch, dass der Detektor 16 einen Mehrfelder-, bzw. Vier-Quadranten-Detektor umfasst. Damit ist die Steuerung 22 in der Lage, die Richtung und/oder die Entfernung eines Objekts, von dem das Laserlicht reflektiert wurde, zu bestimmen. Aus der Entfernung und der Richtung kann die Steuerung 22 damit die dreidimensionale relative Lage des bestrahlten Objekts zur Laserabstrahlvorrichtung 10 ermitteln.

Insbesondere die Entfernung und/oder die Richtung bzw. die dreidimensionale Lage des Objekts, von dem das Laserlicht reflektiert wurde, können wiederum mittels der Laserabstrahlvorrichtung 10, die dazu den Laserstrahl 13 entsprechend moduliert, an das vom Laserstrahl 13 bestrahlte Objekt gesendet werden.

Die Fig. 2 zeigt schematisch eine Laserempfangsvorrichtung 30, die einen Rückstrahler 32, einen Laserempfänger 34 und einen Demodulator 36 umfasst. Der Rückstrahler 32, der beispielsweise ein Winkelreflektor 32 ist, ist dazu ausgeführt, den Laserstrahl 13, der von der Laserabstrahlvorrichtung 10 gesendet wurde, zum Teil zu reflektieren und zu einem anderen Teil auf den Laserempfänger 34 zu richten. Beispielsweise weist der Winkelreflektor 32 eine Öffnung 36 auf, durch die ein Teil des Laserstrahls 13 auf den Laserempfänger 34 fallen kann.

Der Laserempfänger 34 ist dazu ausgeführt, den modulierten Laserstrahl 13 in ein moduliertes elektrisches Signal zu verwandeln, das der Demodulator 36 dazu verwenden kann, die von der Laserabstrahlvorrichtung 10 in den Laserstrahl 13 codierten Daten zu extrahieren und diese Daten 24 dann an weitere Einrichtungen eines Trägers der Laserempfangsvorrichtung 30, beispielsweise eine Steuerung eines Lenkflugkörpers oder eines Bodenfahrzeugs, weiter zu senden.

Die Fig. 3 zeigt ein System 40, das die Laserabstrahlvorrichtung 10 und die Laserempfangsvorrichtung 30 umfasst. Wie aus der Fig. 3 hervorgeht, erzeugt die Laserabstrahlvorrichtung 10 einen kegelförmigen Laserstrahl 13, der derart moduliert wird, dass Datenpakete 42 mittels des Laserstrahls 13 von der Laserabstrahlvorrichtung 10 zu der Laserempfangsvorrichtung 30 gesendet werden können. Die Datenpakete 42 können beispielsweise einen Kopf bzw. Header umfassen, der die Datenpakete 42 identifiziert, und einen Körper bzw. Body, in dem die zu sendenden Daten codiert sind. Der Laserstrahl 13 trifft dann auf die Laserempfangsvorrichtung 30, wo er wie oben stehend beschrieben ausgewertet wird, und mit dem Reflektor 32 in einem stärker aufgeweiteten, kegelförmigen Laserstrahl 17 zurückreflektiert wird. Der Laserstrahl 17 trifft dann wieder auf die Laserabstrahlvorrichtung 10, die dann eine Laufzeit und eine Richtung des Laserstrahls 17 bestimmen kann. Hierzu können auch wieder die Datenpakete 42 verwendet werden, da über deren Header bestimmt werden kann, ob das betreffende Datenpaket von der Laserabstrahlvorrichtung 10 abgesendet wurde.

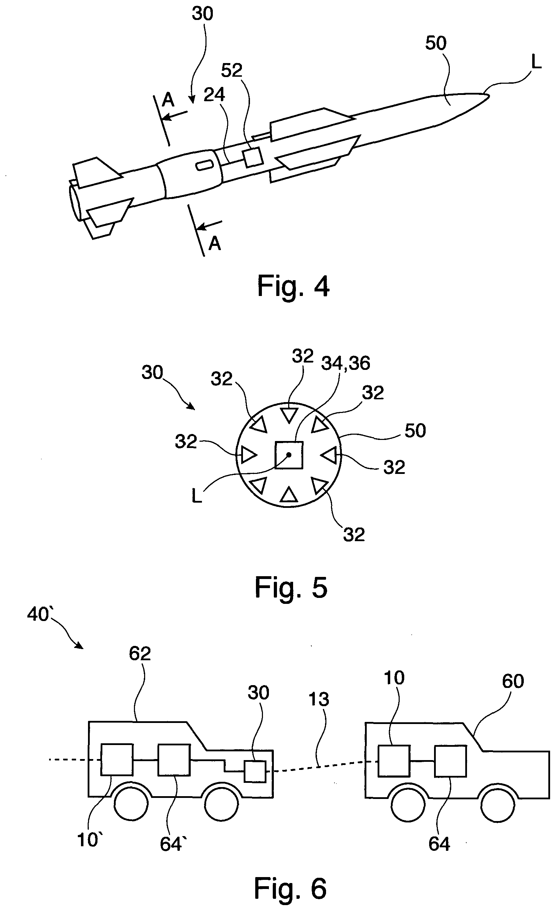

Die Fig. 4 zeigt einen Lenkflugkörper 50, der eine Laserempfangsvorrichtung 30 umfasst. Beispielsweise ist die Laserempfangsvorrichtung 30 in einem hinteren Abschnitt des Lenkflugkörpers 50 angeordnet.

Beispielsweise können die demodulierten Daten 24 aus der Laserempfangsvorrichtung 30 einer Steuerung 52 des Lenkflugkörpers 50 zugeführt werden, mit denen der Lenkflugkörper 50 dann manövrieren kann.

Die Fig. 5 zeigt einen Querschnitt durch den Lenkflugkörper 50 aus der Fig. 4 entlang der Ebene A-A. Wie aus der Fig. 5 hervorgeht, kann die Laserempfangsvorrichtung 30 eine Mehrzahl von Rückstrahlern 32 aufweisen, die in einer Umfangsrichtung um die Längsachse L des Lenkflugkörpers 50 angeordnet sind. Weitere Komponenten 34, 36 der Laserempfangsvorrichtung 30 können beispielsweise in der Mitte zwischen den Rückstrahlern 32 angeordnet sein. Durch eine radiale Anordnung der Laserreflektoren 32, und beispielsweise auch der Lasersensoren bzw. Laserempfänger 34, um den kompletten Flugkörper 50 ist damit auch möglich, dass der Flugkörper 50 während des Flugs rollt, das heißt sich um eine Längsachse L dreht.

Die Fig. 6 zeigt eine weitere Ausführungsform eines Systems 40', das eine Laserabstrahlvorrichtung 10 und eine Laserempfangsvorrichtung 30 umfassen kann. Bei dem System 40' wird die Laserabstrahlvorrichtung 10 von einem ersten Bodenfahrzeug 60 getragen, das beispielsweise von einem Fahrer gesteuert werden kann. Die Laserempfangsvorrichtung 30 wird von einem zweiten Fahrzeug 62 getragen, das dem ersten Bodenfahrzeug 60 folgt.

Mit der Laserabstrahlvorrichtung 10 kann das erste Fahrzeug 60 die Entfernung des zweiten Fahrzeugs 62 ermitteln und Steuerungsinformationen an das zweite Fahrzeug 62 übermitteln. Beispielsweise kann eine Steuerung 64 des ersten Fahrzeugs Informationen über ein Betätigen des Gas- und/oder Bremspedals des ersten Fahrzeugs 60 ermitteln, und an das zweite Fahrzeug 62 übertragen, was eine frühzeitige und angepasste Reaktion des zweiten Fahrzeugs 62 auf bestimmte Aktionen des ersten Fahrzeugs 60 ermöglichen kann. Beispielsweise können die Informationen in einer Steuerung 64' des zweiten Fahrzeugs 62 ausgewertet werden und sogar über eine weitere Laserabstrahlvorrichtung 10', die analog zur Laserabstrahlvorrichtung 10 aufgebaut sein kann, an weitere nachfolgende Fahrzeuge übermittelt werden.

Mit dem System 40' kann somit eine Verkehrssteuerung implementiert werden, mit der ein Verkehrsfluss durch Entfernungsmessung und Weitergabe der Information an das jeweilig nachfolgende Fahrzeug 60, 62 optimiert werden kann. Hierdurch ist eine Optimierung des Abstandes der Fahrzeuge 60, 62 möglich. Auch ist es möglich, das Risiko für einen Auffahrunfall zu reduzieren.

Weiter kann mit dem System 40' eine elektronische Deichsel für die Fahrzeuge 60, 62 umgesetzt werden. Beispielsweise ist es möglich, dass das Fahrzeug 60 bemannt und die nachfolgenden Fahrzeuge 62 unbemannt sind. Das bemannte Fahrzeug 60 kann damit mit einer Kolonne unbemannter Fahrzeuge 62 über den Laserstrahl 13 gekoppelt werden. Über den Laserstrahl kann der Abstand des Fahrzeugs 62 vom Fahrzeug 60 vermessen werden, sowie die Steuerinformationen des Fahrzeugs 60 auf das nachfolgende Fahrzeug 62 übertragen werden, so dass die Bewegung der einzelnen Fahrzeuge 60, 62 an die der Kolonne angepasst werden kann. Beispielsweise kann auf diese Weise die Gefährdung von Personal bei Materialtransport in gefährdeten Gebieten minimiert werden. Weiter ist es möglich, dass das System 40' Informationen auch von den hinteren Fahrzeugen 62 zu den vorderen Fahrzeugen 60 senden kann. Dies kann beispielsweise dadurch bewerkstelligt werden, dass das Fahrzeug 62 an seinem vorderen Ende nicht nur mit einer Laserempfangsvorrichtung 30, sondern auch mit einer Laserabstrahlvorrichtung 10 ausgestattet wird und das Fahrzeug 60 an seinem hinteren Ende nicht nur mit einer Laserabstrahlvorrichtung 10, sondern auch mit einer Laserempfangsvorrichtung 30 ausgestattet wird, so dass ein bidirektionaler Datenaustausch möglich ist.

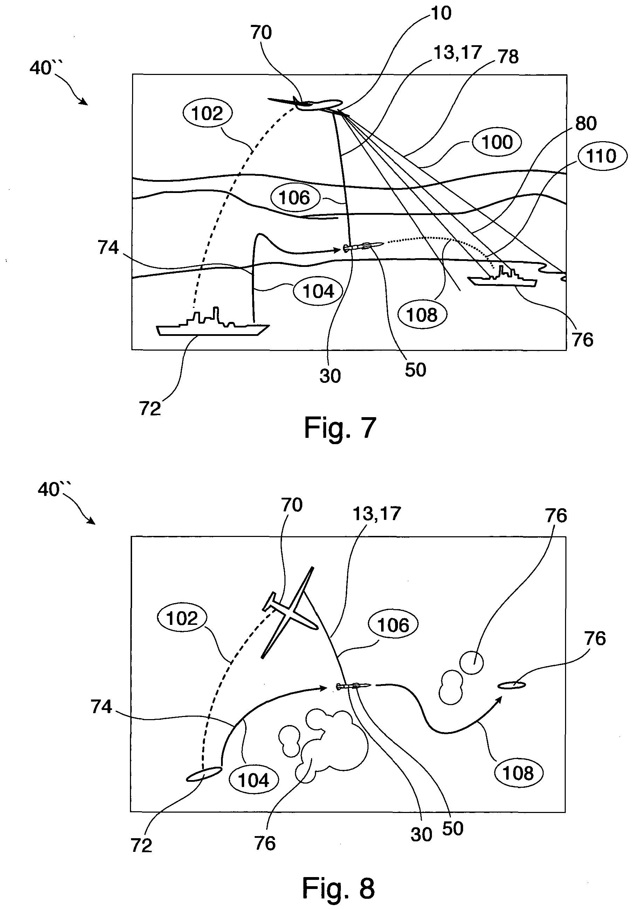

Die Fig. 7 zeigt ein weiteres Diagramm mit einem System 40", das eine Laserabstrahlvorrichtung 10 und eine Laserempfangsvorrichtung 30 umfasst. Die Fig. 7 zeigt eine Szene mit dem System 40" in einer Seitenansicht, die Fig. 8 zeigt die Szene aus der Fig. 7 in einer Ansicht von oben.

Die Laserabstrahlvorrichtung 10 wird dabei von einem Luftfahrzeug 70, in diesem Fall ein Aufklärungsflugzeug 70 bzw. HALE, getragen, die Laserempfangsvorrichtung 30 von einem Lenkflugkörper 50.

Der Lenkflugkörper 50 wird von einem Trägerschiff 72 gestartet und bewegt sich dann auf seiner Flugbahn 74 bis zu einem Ziel 76, das ein weiteres Schiff 76 sein kann.

In einem ersten Schritt 100 ermittelt das Aufklärungsflugzeug 70 das Ziel 76, beispielsweise mit einem System 78, mit dem ein großer Blinkwinkel möglich ist.

In einem Schritt 102 synchronisiert das Aufklärungsflugzeug 70 sein Koordinatensystem fortlaufend mit dem des Trägerschiffs 72 und gegebenenfalls mit weiteren Trägerschiffen und anderen Aufklärungsflugzeugen bzw. HALEs.

Falls ein Ziel 76 identifiziert wurde, startet in einem Schritt 104 der Flugkörper 50 vom Trägerschiff 72.

In einem Schritt 106 erfasst das Aufklärungsflugzeug 70 den gestarteten Flugkörper 50 und etabliert mittels des Laserstrahls 13 eine Verbindung zur Datenübermittlung bzw. einen Datenlink. Eine Vorhersage der Bewegung des Flugkörpers 50 nach dem Start im Schritt 104 kann beispielsweise über ein Modell erfolgen, solange noch keine Verbindung über den Laserstrahl 13 etabliert wurde.

Im Schritt 106 wird der Laserstrahl 13 einerseits dazu verwendet, Daten an den Lenkflugkörper 50 zu übertragen und andererseits, um die Entfernung des Lenkflugkörpers 50 vom Aufklärungsflugzeug 70 bzw. dessen relative Richtung zu bestimmen. Diese Daten werden vom Aufklärungsflugzeug 70 dazu verwendet, einen weiteren Kurs 74 des Lenkflugkörpers 50 zu ermitteln, und die Steuerungsdaten dann mittels des Laserstrahls an den Lenkflugkörper 50 zu übertragen.

In einem Schritt 108 steuert der Flugkörper 50 beispielsweise zusammen mittels eigener Navigation und mit den Informationen von dem Aufklärungsflugzeug 70 auf das Ziel 76 zu.

Der Laserstrahl 13 hat dabei gleichzeitig mehrere Funktionen. Zum einen kann das Aufklärungsflugzeug 70 die Position des Flugkörpers 50 im Raum ermitteln, das heißt der Laserstrahl 13 dient zur Entfernungsmessung. Weiter bekommt der Flugkörper 50 laufend seine eigene Position von dem Aufklärungsflugzeug 70 über den Laserstrahl 13 gemeldet.

Der Lenkflugkörper 50 kann eigene Inertialsensoren (inertial measurement unit IMU) umfassen, mit denen der Lenkflugkörper 50 selbstständig seine Lage und Position im Raum bestimmen kann. Zusätzlich mit den Positionsdaten vom Aufklärungsflugzeug 70 kann der Flugkörper 50 die eigenen Daten mit den übermittelten Daten vergleichen und somit seine Navigation verbessern.

Weiter kann das Aufklärungsflugzeug 70 den geplanten Flugweg 74 des Lenkflugkörpers 50 bis zum Ziel 76 ermitteln und auch aktualisieren, wodurch ein Anvisieren von Zielen 76, die sich in Bewegung befinden, möglich ist.

Alternativ oder zusätzlich ist es möglich, dass das Aufklärungsflugzeug 70 die Zielposition des Ziels 76 ermittelt und dessen aktuelle Position mittels des Laserstrahls 13 an den Lenkflugkörper 50 übermittelt. Der Flugkörper 50 kann dann mit der empfangenen Zielposition autonom navigieren und insbesondere im letzten Abschnitt seines Flugwegs 74 eine Navigation durchführen, auch wenn der Datenlink über den Laserstrahl 13 unterbrochen wurde. Dies ist insbesondere bei sich gleichförmig bewegenden Zielen 76 möglich, wenn nicht nur die Zielposition des Ziels 76, sondern auch dessen aktueller Bewegungsvektor an den Lenkflugkörper 50 übermittelt werden.

Außerdem ist es möglich, dass das Aufklärungsflugzeug 70 fast bis zum Erreichen des Ziels 76 durch den Lenkflugkörper 50 dessen Mission abbrechen kann, indem das Aufklärungsflugzeug 70 entsprechende Steuerkommandos mittels des Laserstrahls 13 an den Lenkflugkörper 50 übermittelt.

Die Flugwegplanung im Lenkflugzeug 70 kann dabei Stellen bzw. Orte berücksichtigen, an denen der Laserstrahl 13 bzw. die Datenübertragung mittels des Laserstrahls 13 beeinträchtigt werden kann. Solche Stellen können beispielsweise dichte Wolken 76 sein.

Eine Übergabe der Führungsaufgabe von dem Aufklärungsflugzeug 70 an ein weiteres Aufklärungsflugzeug 70 während des Fluges des Flugkörpers 50 ist auch möglich.

Darüber hinaus kann in einem Schritt 110 das Aufklärungsflugzeug 70 das sogenannte Battle-Damage-Assessment übernehmen, das heißt das Überprüfen und Beurteilen, wie stark das Ziel 76 durch den Lenkflugkörper 50 beschädigt wurde.

Das Aufklärungsflugzeug 70 kann dazu ein System 80 mit kleinwinkligem Sichtfeld umfassen, mit dem eine Zielidentifikation durchgeführt, das Ziel vermessen und auch das Battle-Damage-Assessment durchgeführt werden kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Laserabstrahlvorrichtung (10), umfassend:
eine Laserquelle (12) zum Generieren eines Laserstrahls (13);
einen Modulator (14) zum Modulieren des Laserstrahls (13);
einen Detektor (16) zum Empfangen eines reflektierten Laserstrahls (17);
wobei die Laserabstrahlvorrichtung (10) dazu ausgeführt ist, Daten (22) zu empfangen und den Laserstrahl (13) zum Übertragen an einen Lenkflugkörper (50) mit einer Laserempfangsvorrichtung (30) mit dem Modulator (14) zu modulieren;
wobei die Laserabstrahlvorrichtung (10) dazu ausgeführt ist, mit dem Detektor (16) eine Entfernung der Laserempfangsvorrichtung (30) zu ermitteln;
wobei die Laserabstrahlvorrichtung (10) dazu ausgeführt ist, den Laserstrahl (13) derart zu modulieren, dass Datenpakete (42) mittels des Laserstrahls (13) von der Laserabstrahlvorrichtung (10) zu der Laserempfangsvorrichtung (30) gesendet werden,
**dadurch gekennzeichnet,**
**dass** die Datenpakete einen Kopf, der die Datenpakete (42) identifiziert, und einen Körper, in dem die Daten (22) codiert sind, umfassen; und
**dass** die Laserabstrahlvorrichtung (10) dazu ausgeführt ist, bei der Ermittlung der Entfernung Datenpakete (42) zu verwenden, über deren Kopf identifiziert wurde, dass die Datenpakete (42) von der Laserabstrahlvorrichtung (10) abgesendet wurden.

2. Laserabstrahlvorrichtung (10) nach Anspruch 1,
wobei die Laserabstrahlvorrichtung (10) dazu ausgeführt ist, den Laserstrahl (13) auf die Laserempfangsvorrichtung zu (30) richten; und/oder
wobei die Laserabstrahlvorrichtung (10) eine steuerbare kardanische Aufhängung (20) für die Laserquelle und den Detektor (16) umfasst.

3. Laserabstrahlvorrichtung (10) nach Anspruch 1 oder 2,
wobei die Laserabstrahlvorrichtung (10) dazu ausgeführt ist, eine Richtung des gestreuten Laserstrahls (17) zu ermitteln; und/oder
wobei der Detektor (16) einen Mehrfelder-Detektor umfasst.

4. Laserabstrahlvorrichtung (10) nach einem der vorhergehenden Ansprüche,
wobei die Laserabstrahlvorrichtung (10) dazu ausgeführt ist, eine dreidimensionale Position der Laserempfangsvorrichtung (30) zu ermitteln.

5. Luftfahrzeug mit einer Laserabstrahlvorrichtung (10) nach einem der Ansprüche 1 bis 4.

6. Bodenfahrzeug mit einer Laserabstrahlvorrichtung (10) nach einem der Ansprüche 1 bis 4.

7. Positionsbestimmungs- und Datenübertragungssystem (40) mit einer Laserabstrahlvorrichtung (10) nach einem der Ansprüche 1 bis 4 und die Laserempfangsvorrichtung (30), die umfasst:
einen Rückstrahler (32) zum Reflektieren eines ersten Teils des Laserstrahls (13) in eine ursprüngliche Richtung des Laserstrahls;
einen Laserempfänger (34) zum Umwandeln eines zweiten Teils des Laserstrahls (13) in ein moduliertes Signal;
einen Demodulator (36) zum Extrahieren von Daten aus dem modulierten Signal.

8. Positionsbestimmungs- und Datenübertragungssystem (40) nach Anspruch 7,
wobei der Rückstrahler (32) einen Winkelreflektor umfasst, der eine Öffnung (36) aufweist, in der der Laserempfänger (34) angeordnet ist.

9. Positionsbestimmungs- und Datenübertragungssystem (40) nach Anspruch 7 oder Anspruch 8,
wobei der Lenkflugkörper (50) eine Mehrzahl von Rückstrahlern (32), die in einer Umfangsrichtung um eine Längsachse (L) des Lenkflugkörpers (50) angeordnet sind.

10. Verfahren zur Positionsbestimmung und Datenübertragung, das Verfahren umfassend die Schritte:
Generieren eines Laserstrahls (13) in einer Laserabstrahlvorrichtung (10);
Empfangen von Daten (24) in der Laserabstrahlvorrichtung (13);
Modulieren des Laserstrahls (13) mit den Daten (24);
Reflektieren eines ersten Teils des Laserstrahls (13) an der Laserempfangsvorrichtung (30);
Empfangen des reflektierten Laserstrahls (17) in der Laserabstrahlvorrichtung (10);
Demodulieren eines zweiten Teils des Laserstrahls in der Laserempfangsvorrichtung (30) zu einem modulierten Signal;
Extrahieren von Daten (24) aus dem modulierten Signal in der Laserempfangsvorrichtung (30);
Ermitteln einer Entfernung zu der Laserempfangsvorrichtung (30) aus dem reflektierten Laserstrahl (17);
wobei der Laserstrahl (13) derart moduliert wird, dass Datenpakete (42) mittels des Laserstrahls (13) von der Laserabstrahlvorrichtung (10) zu der Laserempfangsvorrichtung (30) gesendet werden,
**dadurch gekennzeichnet,**
**dass** die Datenpakete einen Kopf, der die Datenpakete (42) identifiziert, und ein Körper, in dem die Daten (22) codiert sind, umfassen; und
**dass** bei der Ermittlung der Entfernung Datenpakete (42) verwendet werden, über deren Kopf identifiziert wurde, dass die Datenpakete (42) von der Laserabstrahlvorrichtung (10) abgesendet wurden.

11. Verfahren nach Anspruch 10, weiter umfassend:
Ermitteln einer Position der Laserempfangsvorrichtung (30) aus dem reflektierten Laserstrahl (17);
Übermitteln der Position mit dem modulierten Laserstrahl (13) an die Laserempfangsvorrichtung (30).

12. Verfahren nach Anspruch 10 oder 11,
das Verfahren weiter umfassend:
Übermitteln von Steuerdaten an den Lenkflugkörper (50) mit dem modulierten Laserstrahl (13).

## Claims

1. A laser beam device (10), comprising:
a laser source (12) for generating a laser beam (13);
a modulator (14) for modulating the laser beam (13);
a detector (16) for receiving a reflected laser beam (17);
wherein the laser beam device (10) is configured to receive data (20) and to modulate the laser beam (13) with the modulator (14) for transmitting to a guided missile (50) with a laser beam receiving device (30);
wherein the laser beam device (10) is configured to determine a distance of the laser receiving device (30) with the detector (16);
wherein the laser beam device (10) is configured to modulate the laser beam (13) so that data packages (42) are sent from the laser beam device (10) to the laser receiving device (30) by the laser beam (13),
**characterized in that**,
the data packages comprise a header which identifies the data packages (42), and a body in which the data (22) are coded; and
the laser beam device (10) is configured to use data packages (42) for the determination of the distance, by the header of which data packages it was identified that the data packages (42) were sent by the laser beam device (10).

2. Laser beam device (10) according to claim 1,
wherein the laser beam device (10) is configured to direct the laser beam (13) to the laser receiving device (30); and/or
wherein the laser beam device (10) comprises a controllable gimballed mount (20) for the laser source and the detector (16).

3. Laser beam device (10) according to claim 1 or 2,
wherein the laser beam device (10) is configured to determine a direction of the scattered laser beam (17); and/or
wherein the detector (16) comprises a multifield detector.

4. Laser beam device (10) according to any one of the preceding claims,
wherein the laser beam device (10) is configured to determine a three-dimensional position of the laser receiving device (30).

5. Aircraft with a laser beam device (10) according to any one of claims 1 to 4.

6. Ground vehicle with a laser beam device (10) according to any one of claims 1 to 4.

7. Position determination and data transmission system (40) with a laser beam device (10) according to any one of the claims 1 to 4 and the laser receiving device (30) which comprises:
a rear reflector (32) for reflecting a first part of the laser beam (13) in an initial direction of the laser beam;
a laser receiver (34) for transforming of a second part of the laser beam (13) into a modulated signal;
a demodulator (36) for extracting data out of the modulated signal.

8. Position determination and data transmission system (40) according to claim 7,
wherein the rear reflector (32) comprises a corner reflector which comprises an opening (36) in which the laser receiving device (34) is arranged.

9. Position determination and data transmission system (40) according to claim 7 or claim 8,
wherein the guided missile (50) comprises a multitude of rear reflectors (32) which are arranged in a circumferential direction around a longitudinal axis (L) of the guided missile (50).

10. Method for determining a position and transmitting data, the method comprising the steps:
Generating a laser beam (13) in a laser beam device (10);
Receiving data (24) in the laser beam device (13);
Modulating the laser beam (13) with the data (24);
Reflecting a first part of the laser beam (13) at the laser receiving device (30);
Receiving the reflected laser beam (17) in the laser beam device (10);
Demodulating a second part of the laser beam in the laser receiving device (30) to a modulated signal;
Extracting data (24) out of the modulated signal in the laser receiving device (30);
Determining a distance to the laser receiving device (30) based on the reflected laser beam (17);
wherein the laser beam (13) is modulated in a way that data packages (42) are sent by the laser beam device (10) to the laser receiving device (30) by means of the laser beam (13),
**characterized in that**
the data packages comprise a header which identifies the data packages (42), and a body in which the data (22) is coded; and
for determining the distance data packages (42) are used by the header of which data packages it was identified that the data packages (42) were sent by the laser beam device (10).

11. Method according to claim 10, further comprising:
Determining a position of the laser receiving device (30) based on the reflected laser beam (17);
Transmitting the position to the laser receiving device (30) with the modulated laser beam (13).

12. Method according to claim 10 or 11,
the method further comprising:
Transmitting control data to the guided missile (50) with the modulated laser beam (13).

## Revendications

1. Dispositif de rayonnement laser (10) comprenant :
une source laser (12) destinée à générer un rayon laser (13) ;
un modulateur (14) destiné à moduler le rayon laser (13) ;
un détecteur (16) destiné à recevoir un rayon laser (17) réfléchi ;
dans lequel le dispositif de rayonnement laser (10) est réalisé pour recevoir des données (22) et pour moduler, à l'aide du modulateur (14), le rayon laser (13) pour la transmission à un missile (50) au moyen d'un dispositif de réception laser (30) ;
dans lequel le dispositif de rayonnement laser (10) est réalisé pour détecter une distance du dispositif de réception laser (30) au moyen du détecteur (16) ;
dans lequel le dispositif de rayonnement laser (10) est réalisé pour moduler le rayon laser de manière à ce que des paquets de données (42) soient émis à partir du dispositif de rayonnement laser (10) vers le dispositif de réception laser (30) à l'aide du rayon laser (13),
**caractérisé en ce**
**que** les paquets de données comprennent une tête, qui identifie les paquets de données (42), et un corps, dans lequel les données (22) sont codées ; et
**que** le dispositif de rayonnement laser (10) est réalisé pour utiliser des paquets de données (42), lors de la détection de la distance, par l'intermédiaire de la tête desquels il a été identifié que les paquets de données (42) ont été émis à partir du dispositif de rayonnement laser (10).

2. Dispositif de rayonnement laser (10) selon la revendication 1,
dans lequel le dispositif de rayonnement laser (10) est réalisé pour diriger le rayon laser (13) sur le dispositif de réception laser (30) ; et /ou dans lequel le dispositif de rayonnement laser (10) comprend une suspension à cardan commandable pour la source laser et le détecteur (16).

3. Dispositif de rayonnement laser (10) selon la revendication 1 ou 2,
dans lequel le dispositif de rayonnement laser (10) est réalisé pour détecter une direction du rayon laser (17) diffusé ; et/ou
dans lequel le détecteur (16) comprend un détecteur à champs multiples.

4. Dispositif de rayonnement laser (10) selon l'une quelconque des revendications précédentes, dans lequel le dispositif de rayonnement laser (10) est réalisé pour détecter une position tridimensionnelle du dispositif de réception laser (30).

5. Avion comprenant un dispositif de rayonnement laser (10) selon l'une quelconque des revendications 1 à 4.

6. Véhicule terrestre comprenant un dispositif de rayonnement laser (10) selon l'une quelconque des revendications 1 à 4.

7. Système de détermination de position et de transmission de données (40) comportant un dispositif de rayonnement laser (10) selon l'une quelconque des revendications 1 à 4 et le dispositif de réception laser (30) qui comprend. un réflecteur (32) destiné à réfléchir une première partie du rayon laser (13) dans une direction initiale du rayon laser;
un récepteur laser (34) destiné à convertir une deuxième partie du rayon laser (13) en un signal modulé ;
un démodulateur (36) destiné à extraire des données à partir du signal modulé.

8. Système de détermination de position et de transmission de données (40) selon la revendication 7,
dans lequel le réflecteur (32) comprend un réflecteur angulaire qui présente une ouverture (36) dans laquelle est disposé le récepteur laser (34).

9. Système de détermination de position et de transmission de données (40) selon la revendication 7 ou la revendication 8,
dans lequel le missile (50) une pluralité de réflecteurs (32) qui sont disposés selon une direction circonférentielle autour d'un axe longitudinal (L) du missile (50).

10. Procédé de détermination de position et de transmission de données, le procédé comprenant les étampes :
génération d'un rayon laser (13) dans un dispositif de rayonnement laser (10) ;
réception de données (24) dans le dispositif de rayonnement laser (13) ;
modulation du rayon laser (13) au moyen des données (24) ;
réflexion d'une première partie du rayon laser (13) sur le dispositif de réception laser (30) ;
réception du rayon laser (17) réfléchi dans le dispositif de rayonnement laser (10) ;
démodulation, dans le dispositif de réception laser (30), d'une deuxième partie du rayon laser en un signal modulé ;
extraction de données (24) à partir du signal modulé dans le dispositif de réception laser (30) ;
détection d'une distance par rapport au dispositif de réception laser (30) à partir du rayon laser (17) réfléchi ;
dans lequel le rayon laser (13) est modulé de manière à ce des paquets de données (42) soient émis à partir du dispositif de rayonnement laser (10) vers le dispositif de réception laser (30) à l'aide du rayon laser (13),
**caractérisé en ce**
**que** les paquets de données comprennent une tête, qui identifie les paquets de données (42), et un corps dans lequel les données (22) sont codées ; et
**que** lors de la détection de la distance, des paquets de données (42) sont utilisés par l'intermédiaire de la tête desquels il a été identifié que les paquets de données (42) ont été émis à partir du dispositif de rayonnement laser (10).

11. Procédé selon la revendication 10, comprenant en outre :
détection d'une position du dispositif de réception laser (30) à partir du rayon laser (17) réfléchi ;
transmission de la position au dispositif de réception laser (30) au moyen du rayon laser (13) modulé.

12. Procédé selon la revendication 10 ou 11, le procédé comprenant en outre :
transmission de données de commande au missile (50) au moyen du rayon laser (13) modulé.
